# EUROPEAN PATENT APPLICATION

(11) **EP 4 675 881 A1**
(43) Date of publication of application: **07.01.2026**
(21) Application number: 25185559.9
(22) Date of filing: 26.06.2025
(51) Int. Cl.: H02J 4/00, H02J 7/14, H02J 7/34, H02J 7/35

(54) **RECONFIGURABLE ELECTRICAL ARCHITECTURE FOR EFFICIENT OPERATION OF A TRAILER REFRIGERATION UNIT**

(30) Priority: 02.07.2024 US 202463666829 P
(71) Applicant: Carrier Corporation, Palm Beach Gardens, FL 33418 (US)
(72) Inventor: SHAH, Vaibhav, 500081 Hyderabad (IN); ARVIND, Ramya Vyas, Kennesaw, 30144 (US); ARNEDO, Luis, East Syracuse, 13057 (US); JUNNURI, Venkata Satya Sai Ramesh Kumar, 500081 Hyderabad (IN); LIAO, Xuqiang, East Syracuse, 13057 (US)
(74) Representative: Dehns

(57) **Abstract**

An electrical architecture (101) for an electric/engineless trailer refrigeration unit, ETRU, is provided. The electrical architecture (101) includes a battery (1), multiple auxiliary direct current, DC, power sources (3), multiple auxiliary alternating current, AC, power sources (8), TRU components (4), a master controller (5) and a reconfigurable power conversion unit, RPCU (2). The RPCU (2) is configurable by the master controller (5) to transmit electrical power between the battery (1), the multiple auxiliary DC power sources (3), the multiple auxiliary AC power sources (8) and the TRU components (4) in accordance with current operational conditions, power levels of the battery (1), the multiple auxiliary DC power sources (3) and the multiple auxiliary AC power sources (8) and power demands of the TRU components (4).

## Description

### BACKGROUND

The present invention relates to trailer refrigeration units (TRUs) and, more particularly, to a reconfigurable electrical architecture for efficient operation of a TRU via selective coupling of multiple power sources.

In the field of the transportation of goods, transport or trailer refrigeration units (TRUs) are refrigeration systems. TRUs are often powered by diesel internal combustion engines. They are designed to refrigerate or, in some cases, heat perishable products that are transported in various containers. Such containers can include, but are not limited to, truck vans, semi-truck trailers, shipping containers and railcars.

### BRIEF DESCRIPTION

According to an aspect of the invention, an electrical architecture for an electric/engineless trailer refrigeration unit (ETRU) is provided. The electrical architecture includes a battery, multiple auxiliary direct current (DC) power sources, multiple auxiliary alternating current (AC) power sources, TRU components, a master controller and a reconfigurable power conversion unit (RPCU). The RPCU is configurable by the master controller to transmit electrical power between the battery, the multiple auxiliary DC power sources, the multiple auxiliary AC power sources and the TRU components in accordance with current operational conditions, power levels of the battery, the multiple auxiliary DC power sources and the multiple auxiliary AC power sources and power demands of the TRU components.

Optionally, the multiple auxiliary DC power sources include at least one of a fuel cell and a photovoltaic cell.

Optionally, the multiple auxiliary AC power sources include at least one of offshore AC power and an AC charging station.

Optionally, the current operational conditions include on road conditions, parked conditions, variable voltage and variable frequency (VVVF) mode operations and constant voltage and constant frequency (CVCF) mode operations.

Optionally, the power levels of the battery, the multiple auxiliary DC power sources and the multiple auxiliary AC power sources include instances in which there is an excess power level of one or more of the multiple auxiliary DC power sources.

Optionally, the power demands of the TRU components exceed the power levels of the multiple auxiliary AC power sources.

Optionally, the RPCU includes an AC-DC converter, a DC-DC converter, a bi-directional DC-DC converter, a multi-port DC-AC converter and an interfacing inductor.

Optionally, the RPCU further includes a first port by which the RPCU is electrically connected with the battery power, a first switchable port by which the RPCU is electrically connectable with the multiple auxiliary DC power sources, a second switchable port by which the RPCU is electrically connectable with the selected ones of the multiple auxiliary AC power sources and a third switchable port by which the RPCU is electrically connectable with the TRU components.

Optionally, the RPCU further includes a first bypass switch by which one of the DC-DC converter and the bi-directional DC-DC converter are bypassed and a second bypass switch by which the interfacing inductor is bypassed.

According to an aspect of the invention, an electrical architecture for an electric/engineless trailer refrigeration unit (ETRU) is provided. The electrical architecture includes a battery, multiple auxiliary direct current (DC) power sources, multiple auxiliary alternating current (AC) power sources, TRU components, a master controller and a reconfigurable power conversion unit (RPCU). The RPCU includes an AC-DC converter, a DC-DC converter, a bi-directional DC-DC converter, a multi-port DC-AC converter and an interfacing inductor. The RPCU is configurable by the master controller to transmit electrical power between the battery, the multiple auxiliary DC power sources, the multiple auxiliary AC power sources and the TRU components in accordance with current operational conditions, power levels of the battery, the multiple auxiliary DC power sources and the multiple auxiliary AC power sources and power demands of the TRU components.

Optionally, the multiple auxiliary DC power sources include at least one of a fuel cell and a photovoltaic cell.

Optionally, the multiple auxiliary AC power sources include at least one of offshore AC power and an AC charging station.

Optionally, the current operational conditions include on road conditions, parked conditions, variable voltage and variable frequency (VVVF) mode operations and constant voltage and constant frequency (CVCF) mode operations.

Optionally, the power levels of the battery, the multiple auxiliary DC power sources and the multiple auxiliary AC power sources include instances in which there is an excess power level of one or more of the multiple auxiliary DC power sources.

Optionally, the power demands of the TRU components exceed the power levels of the multiple auxiliary AC power sources.

Optionally, the RPCU further includes a first port by which the RPCU is electrically connected with the battery power, a first switchable port by which the RPCU is electrically connectable with the multiple auxiliary DC power sources, a second switchable port by which the RPCU is electrically connectable with the selected ones of the multiple auxiliary AC power sources and a third switchable port by which the RPCU is electrically connectable with the TRU components.

Optionally, the RPCU further includes a first bypass switch by which one of the DC-DC converter and the bi-directional DC-DC converter are bypassed and a second bypass switch by which the interfacing inductor is bypassed.

According to an aspect of the invention, a reconfigurable power conversion unit (RPCU) is provided for powering a trailer refrigeration unit (TRU). The RPCU includes an alternating current (AC)-direct current (DC) converter, a DC-DC converter, a bi-directional DC-DC converter, a multi-port DC-AC converter and an interfacing inductor. The RPCU is configured to perform multiple functionalities via reconfigurations of the AC-DC converter, the DC-DC converter, the bi-directional DC-DC converter, the multi-port DC-AC converter and the interfacing inductor.

Optionally, the RPCU further includes a first port by which the RPCU is electrically connected with the battery power, a first switchable port by which the RPCU is electrically connectable with the multiple auxiliary DC power sources, a second switchable port by which the RPCU is electrically connectable with the selected ones of the multiple auxiliary AC power sources, a third switchable port by which the RPCU is electrically connectable with the TRU components, a first bypass switch by which one of the DC-DC converter and the bi-directional DC-DC converter are bypassed and a second bypass switch by which the interfacing inductor is bypassed.

Optionally, the RPCU is reconfigurable for powering the TRU using battery power independently, powering the TRU using at least one or more of battery power, auxiliary AC power and auxiliary DC power, powering the TRU and battery charging using auxiliary AC power in a parked condition and allowing for constant voltage, constant frequency (CVCF) and variable voltage, variable frequency (VVVF) operations.

For a better understanding of the invention with the advantages and the features, refer to the description and to the drawings.

### BRIEF DESCRIPTION OF THE DRAWINGS

For a more complete understanding of this invention, reference is now made to exemplary embodiments as described in the following brief description, taken in connection with the accompanying drawings and detailed description, wherein like reference numerals represent like parts:
FIG. 1 is a schematic diagram of an electrical architecture;
FIG. 2 is a schematic diagram of a reconfigurable power conversion unit (RPCU) of the electrical architecture of FIG. 1;
FIGS. 3A and 3B are schematic diagrams illustrating an operational mode of the RPCU of FIG. 2 in which a TRU is powered independently by a battery;
FIGS. 4A, 4B and 4C are schematic diagrams illustrating an operational mode of the RPCU of FIG. 2 in which a TRU is powered by a battery and an auxiliary DC power source;
FIG. 5 is a schematic diagram illustrating an operational mode of the RPCU of FIG. 2 in which a TRU is powered by an auxiliary DC power source;
FIGS. 6A, 6B and 6C are schematic diagrams illustrating an operational mode of the RPCU of FIG. 2 in which a TRU is powered by a battery and an auxiliary AC power source;
FIGS. 7A and 7B are schematic diagrams illustrating an operational mode of the RPCU of FIG. 2 in which a TRU is powered by an auxiliary AC power source;
FIG. 8 is a schematic diagram illustrating an operational mode of the RPCU of FIG. 2 in which, in a parked condition, a TRU is powered with constant voltage, constant frequency (CVCF) power and a battery is simultaneously charged; and
FIG. 9 is a schematic diagram illustrating an operational mode of the RPCU of FIG. 2 in which, in a parked condition, a TRU is powered with variable voltage, variable frequency (VVVF) power and a battery is simultaneously charged.

### DETAILED DESCRIPTION

For TRUs to operate properly, electric power is often required to run associated components. These associated components can include one or more of an electric motor within a compressor, evaporator and/or condenser fans, air moving devices, a heater and various other refrigeration unit components. Predominantly, TRUs glean power from a diesel engine (DE) attached onto a front of a trailer unit itself. Typically, the DE continuously delivers power when the trailer unit is on the road or when parked. Also, for transportation of perishable/frozen or medical items, when the trailer is parked, refrigeration capability needs to be available at all times so DE are often turned on hours before departure. With increasing fuel costs, emission and noise regulations/norms/guidelines imposed via different regulatory authorities especially for within city transport conditions, DE powered TRUs face challenges.

To address these issues, electric/engineless TRUs (ETRUs) are evolving. While value propositions of ETRUs can be compelling, charging infrastructure, battery cost and sizing/weight, flexibility of the electrical architecture to simultaneously supply power via multiple clean power sources are some of the barriers need to be addressed.

Thus, as will be described below, a reconfigurable electrical architecture for powering ETRUs is provided. The reconfigurable electrical architecture can perform multiple functionalities via reconfiguring/leveraging its power electronics sub-components and altering their control to perform targeted/dictated functionalities.

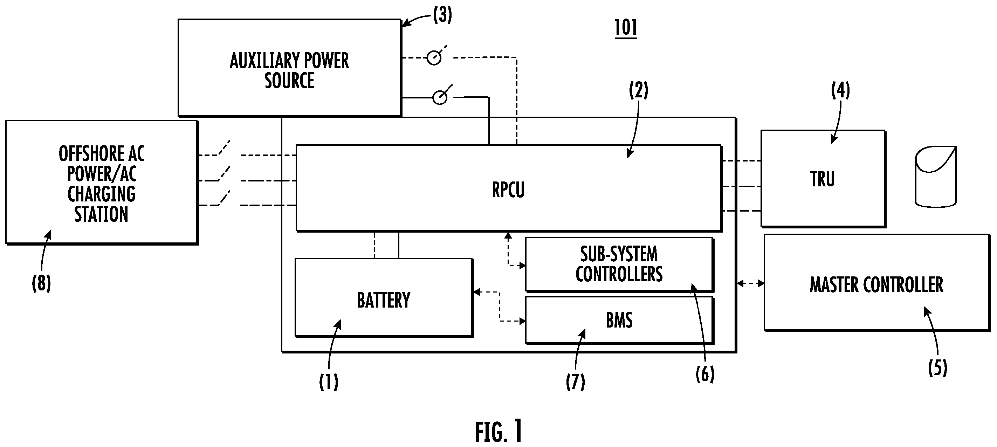

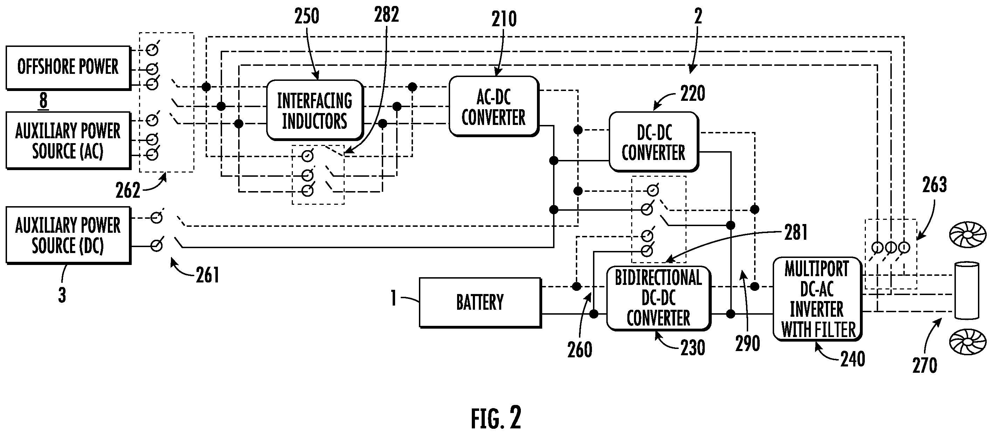

With reference to FIGS. 1 and 2, an electrical architecture 101 for an ETRU is provided. The electrical architecture 101 includes a battery power source 1, a reconfigurable power conversion unit (RPCU) 2, multiple auxiliary direct current (DC) power sources 3, which can be available on a trailer/truck or which can be coupled to the truck, a TRU 4, a master controller 5, sub-system controllers 6, a battery management system 7, multiple auxiliary alternating current (AC) power sources 8, which can be available on the trailer/truck or which can be coupled to the truck and an offshore AC power source/charging station AC power supply port. The multiple auxiliary DC power sources 3 can include, but are not limited to, a fuel cell, a photovoltaic fuel cell and batteries besides the battery power source 1. The TRU 4 can be connected with or coupled to TRU load components 270 (see FIG. 2), such as an electric motor within a compressor and at least one or more evaporator and condenser fans. The multiple auxiliary AC power sources 8 can include, but are not limited to, offshore AC power and an AC charging station.

The master controller 5 is responsible for various electronic communications and receives data, such as temperature data and humidity data from sensors placed within a refrigerated container on the trailer. Based on information of the received data, the master controller 5 is configured to turn the compressor on and off to maintain temperature and humidity levels inside the refrigerated container. The master controller 5 also monitors the state-of-charge (SOC) of the battery power source 1 and may receive multiple signals, such as DC bus voltage signals and current magnitude signals from sensors inside the RPCU 2 to detect faults and isolate the battery power source 1, the TRU 4 and at least one or more of the multiple auxiliary DC power sources 3 and the multiple auxiliary AC power sources 8. The master controller 5 also receives information on whether the trailer is parked or moving. Depending on such operating parameters, the master controller 5 dictates reconfigurations of sub-components of the RPCU 2 and their respective controls allowing for the multiple auxiliary DC power sources 3 and the multiple auxiliary AC power source 8 to deliver electric power to the TRU 4 and/or the battery power source 1.

As shown in FIG. 2, the RPCU 2 includes at least one or more of each of the following: an AC-DC converter 210, a DC-DC converter 220, a bi-directional DC-DC converter 230, a multi-port DC-AC inverter 240 and an interfacing inductor 250. The bi-directional DC-DC converter 230 allows for a controlled flow of power in either (i.e., forward or reverse) direction and can be of any type such as, isolated, non-isolated, single state, n-phase interleaved, etc. The bidirectional DC-DC converter 230 can be configured to perform unidirectional/bidirectional buck operation, unidirectional/bidirectional boost operation or bidirectional buck and boost operation. The RPCU 2 further includes first port 260 by which the RPCU 2 is electrically connected with the battery power source 1, first switchable port 261 by which the RPCU 2 is electrically connectable with the multiple auxiliary DC power sources 3, second switchable port 262 by which the RPCU is electrically connectable with selected ones of the multiple auxiliary AC power sources 8, third switchable port 263 by which the RPCU 2 is electrically connectable with TRU load components 270, first bypass switch 281, second bypass switch 282 and DC bus 290. The DC bus 290 connects each of the above-mentioned components of the RPCU 2.

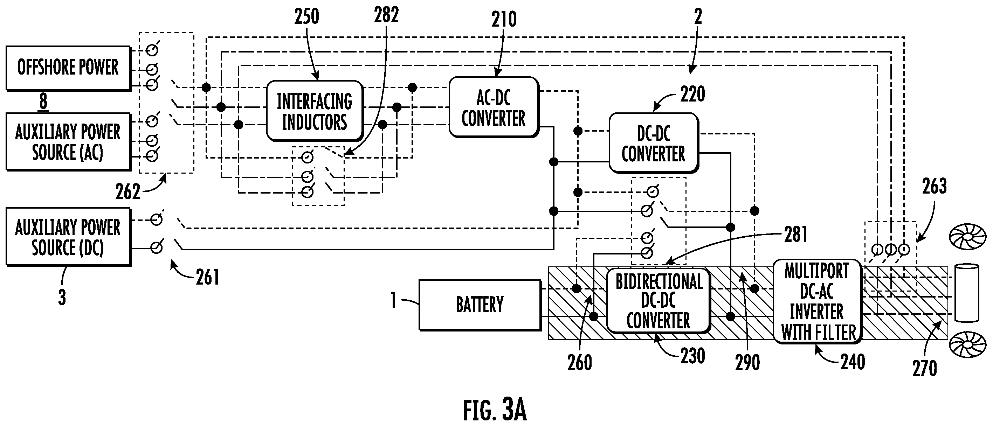

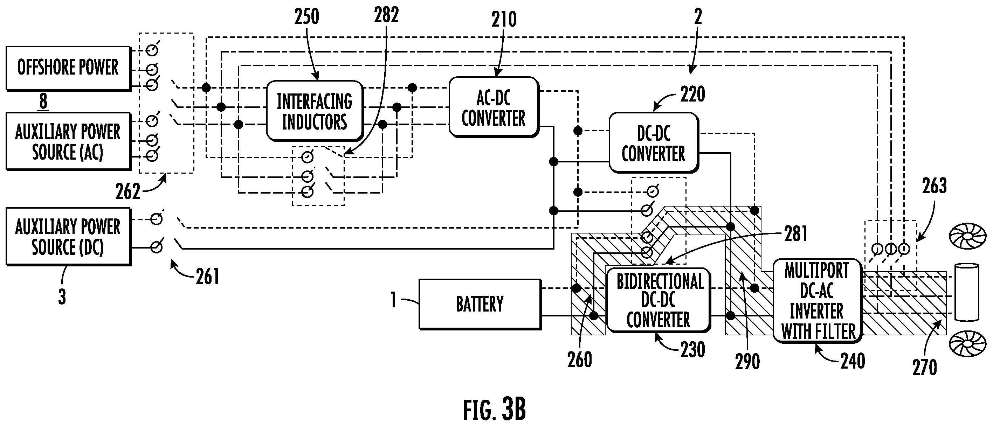

The bidirectional DC-DC converter 230 can be interfaced to DC terminals of the multiport DC-AC inverter 240 via the DC bus 290 of the RPCU 7. AC terminals of the multi-port DC-AC inverter 240 can be electrically coupled or interfaced to the TRU components 270. Thus, with the proposed RPCU 2, the battery power source 1 can independently supply the demanded TRU power if no power is available via other ones of the multiple auxiliary DC power sources 3 and the multiple auxiliary AC power sources 8. This power path is highlighted in FIG. 3A. Also, when the battery power source 1 output voltage is sufficient to drive the compressor directly, the bidirectional DC-DC converter 230 can be bypassed directly to the battery power source 1 as shown in FIG. 3B. Bypassing the bidirectional DC-DC converter 230 can improve efficiency by eliminates converter losses.

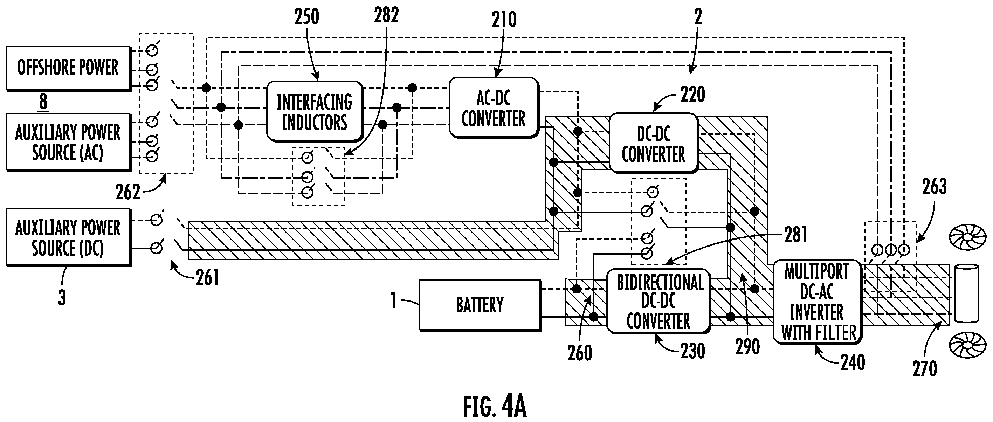

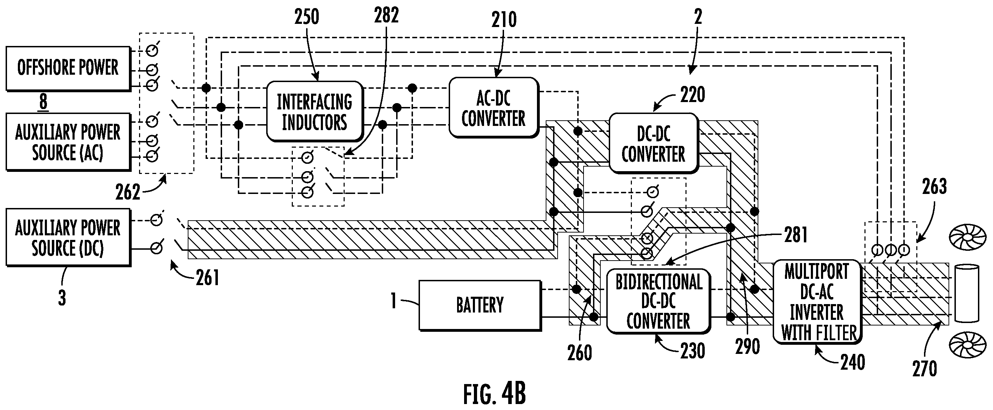

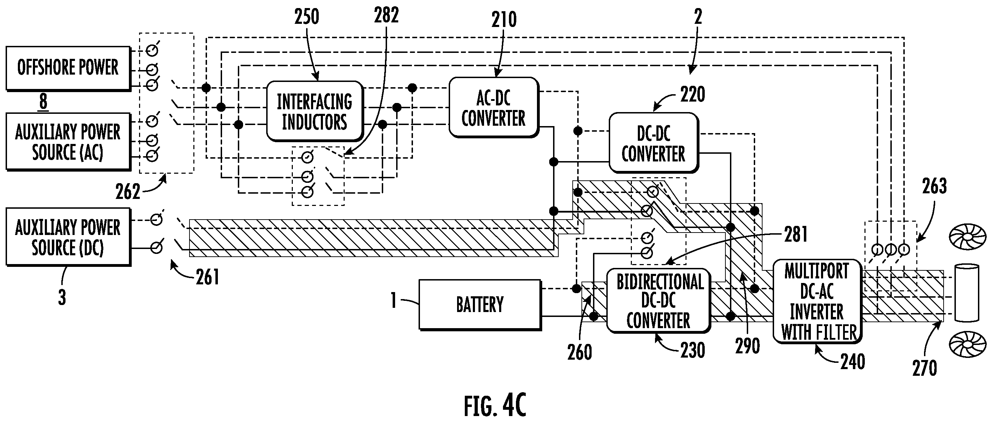

In addition to one of more features described above, the DC bus 290 of the RPCU 7 may simultaneously take incoming power from at least one of the multiple DC power sources 3 and the multiple auxiliary AC power sources 8 via the DC-DC converter 220. The DC-DC converter 220 allows voltage boost and controlled flow of power towards the DC bus 290. The voltage level of the DC bus 290 can be maintained to a set value via controlling the power flow direction though the bidirectional DC-DC converter 230. The bidirectional DC-DC converter 230 controls the charging or discharging of the battery power source 1 which can further depend on a power contribution by the multiple auxiliary DC power sources 3. That is, if the power contribution of the multiple auxiliary DC power sources 3 exceeds a power demand of the TRU components 270, then the bidirectional DC-DC converter 230 will charge the battery power source 1 with available excess power. If the power contribution from the multiple auxiliary DC power sources 3 is less than the power demand of the TRU components 270, the bidirectional DC-DC converter 230 will discharge the battery power source 1. To conclude the above-mentioned feature, with the proposed RPCU 2, the battery power source 1 and at least one of the multiple auxiliary DC power sources 3 can simultaneously supply demanded power of the TRU components 270 and if excess power is available from the multiple auxiliary DC power sources 3, the proposed RPCU 2 can be reconfigured for controlled charging of the battery power source 1 according to the power path highlighted in FIG. 4A. Alternative paths of operation in which the bidirectional DC-DC converter 230 and the DC-DC converter 220 can be bypassed for increased efficiency are illustrated in FIGS. 4B and 4C, respectively.

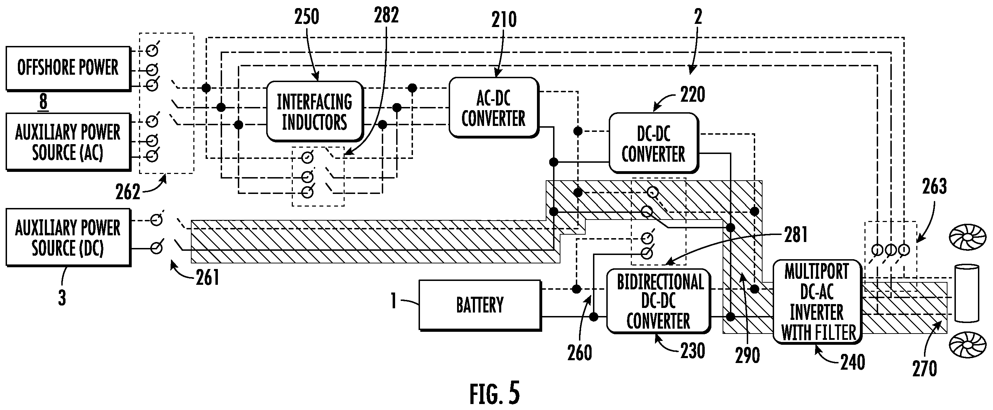

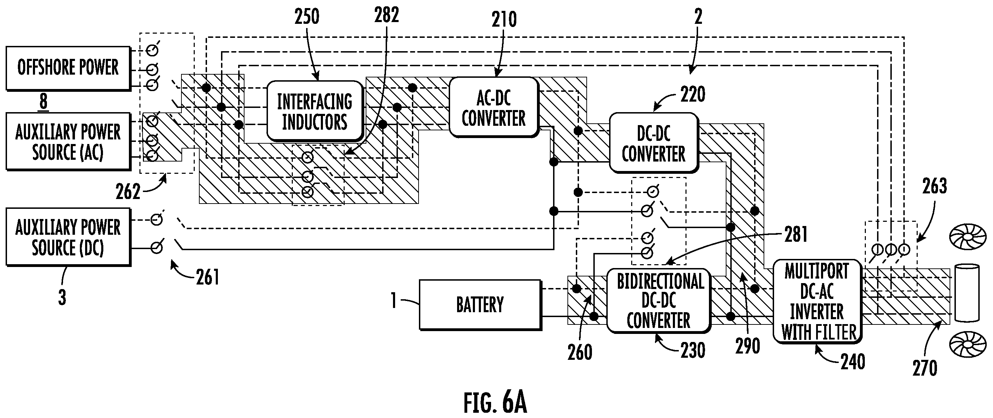

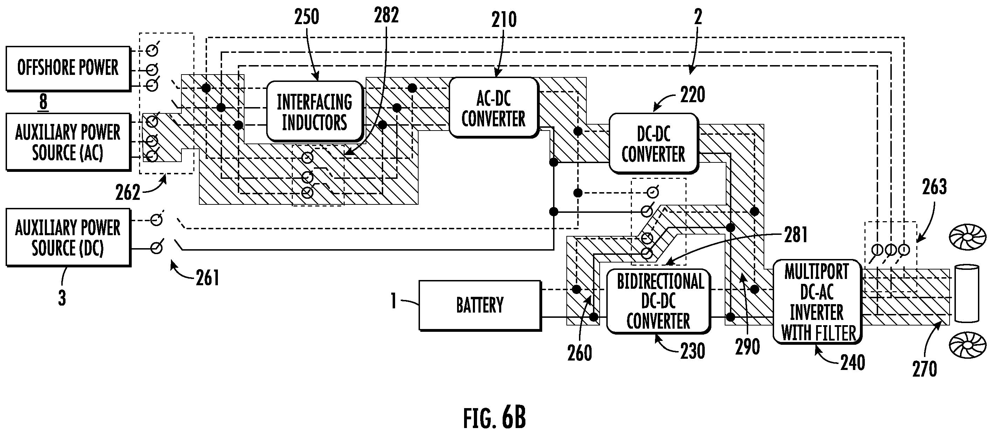

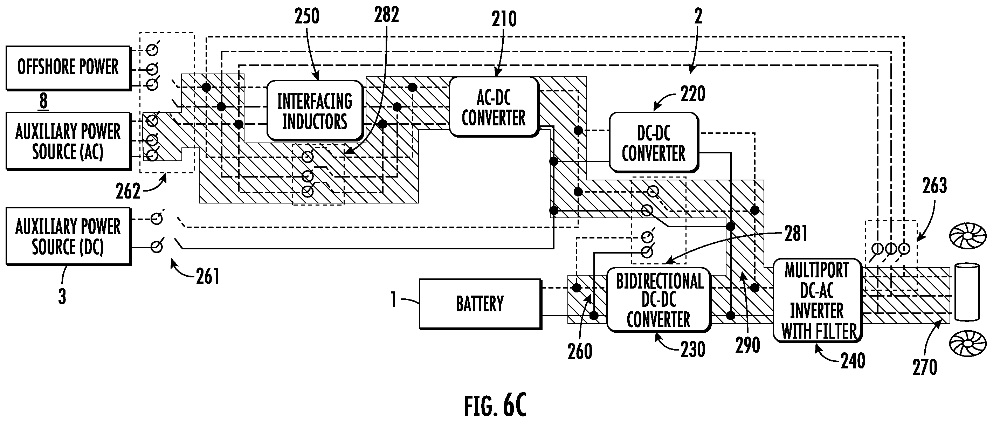

In additional embodiments, the DC bus 290 can directly utilize power supplied from the multiple auxiliary DC power sources 3 to directly operate the TRU components 270 via the multi-port DC-AC inverter 240 as shown in FIG. 5. The power flow paths highlighted in FIGS. 4A, 4B, 4C and 5 can also facilitate regenerative braking. The DC bus 290 can also simultaneously receive incoming power from at least one of the multiple auxiliary AC power sources 8 via the second switchable port 262. The connection of at the least one of the multiple auxiliary AC power sources 8 to the DC bus 290 is accomplished via closing the second bypass switch 282 to thereby bypass the interfacing inductor 250 and directly connect the second switchable port 262 to the input AC side of the AC-DC converter 210. The AC-DC converter 210 can be either a passive or an active rectifier. Output of the AC-DC converter 210 can be connected to the DC-DC converter 220, which allows voltage boost and controlled flow of power towards the DC bus 290. A voltage level of the DC bus 290 can be maintained to a set value via controlling power flow direction through the bidirectional DC-DC converter 230. The control of the bidirectional DC-DC converter 230 effectively controls the charging or discharging of the battery power source 1 which further depends on a power contribution by the multiple auxiliary AC power source 8 to the DC bus 290. As above, if the power contribution of the multiple auxiliary AC power sources 8 exceeds a power demand of the TRU components 270, the bidirectional DC-DC converter 230 will charge the battery power source 1 with available excess power and if the power contribution of the multiple auxiliary AC power sources 8 is less than the power demand of the TRU components 270, then the bidirectional DC-DC converter 230 will discharge the battery power source 1. To conclude the above-mentioned feature, with the proposed RPCU 2, the battery power source 1 and at least one of the multiple auxiliary DC power sources 3 can simultaneously supply demanded power of the TRU components 270 and if excess power is available from the multiple auxiliary DC power sources 3, the proposed RPCU 2 can be reconfigured for controlled charging of the battery power source 1 according to the power path highlighted in FIG. 6A. Alternative paths of operation in which the bidirectional DC-DC converter 230 and the DC-DC converter 220 can be bypassed for increased efficiency are illustrated in FIGS. 6B and 6C, respectively.

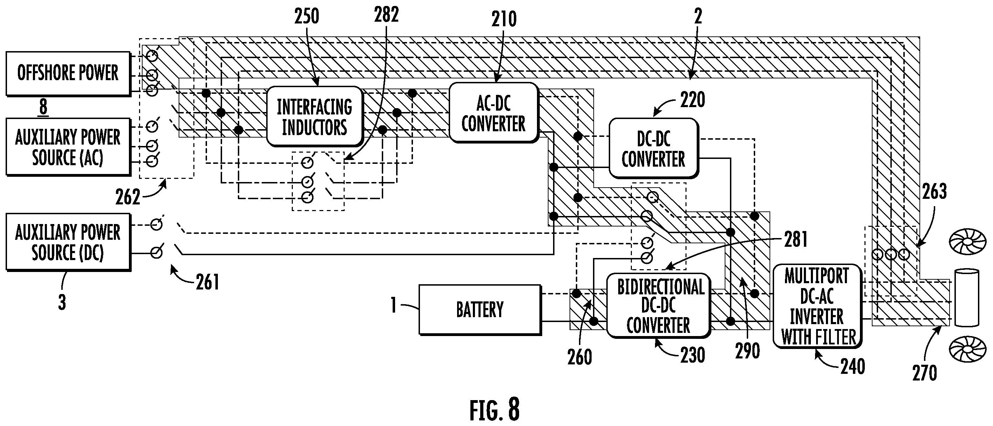

Operating modes when a trailer to which the RPCU 2 is connected is parked will now be described. When the trailer is parked, the RPCU 2 allows offshore AC power to be directly delivered to the TRU components 270 by closure of the third switchable port 263 and by opening of the second bypass switch 282. As shown in FIG. 8. By running the TRU components 270 directly via the offshore power allows constant voltage and constant frequency (CVCF) operation which makes the compressor and fans of the TRU components 270 run at a constant speed (referred to as constant speed compressor operation). To simultaneously charge the battery power source 1 while the compressor is operating in CVCF in the parked condition, the offshore power which is electrically coupled with the interfacing inductor 250 can be transformed/processed via the AC-DC converter 210. The DC-AC converter isolates the path of FIG. 8 through which the TRU components are directly connected to the offshore AC power and the path of FIG. 8 that is used for controlled charging of the battery power source 1.

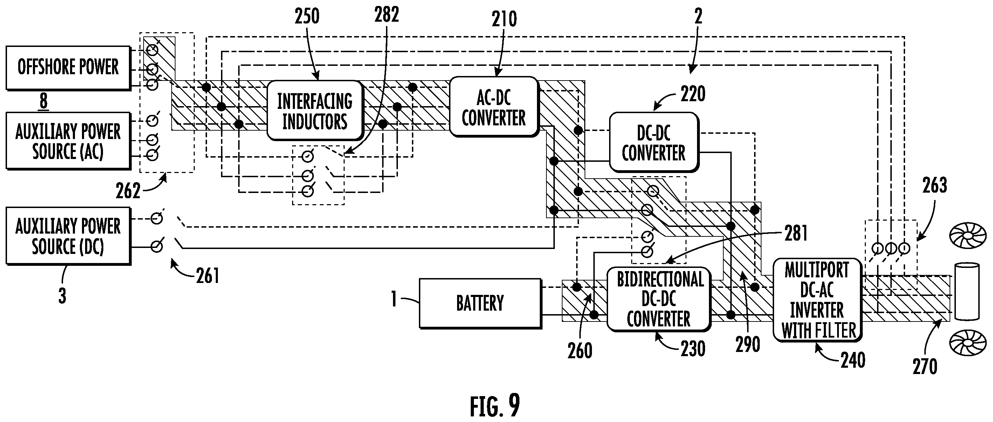

In addition to one of more features described above, when the trailer is parked, the RPCU 2 can operate the TRU components 270 in variable voltage and variable frequency (VVVF) mode and can simultaneously charge the battery power source 1. As shown in FIG. 9, for this mode of operation of the RPCU 2, the third switchable port 263 and the second bypass switch 282 are opened. For simultaneously charging the battery power source 1, the offshore power is connected to at least one of the terminals of the interfacing inductor 250. When the second bypass switch 282 is open, the interfacing inductor 250 is connected to the second switchable port 262 and the input AC side of the AC-DC converter 210. The output of the AC-DC converter 210 is directly connected to the DC bus 290 by way of the DC-DC converter 220 being bypassed by first bypass switch 281 whereby the bi-directional DC-DC converter 230 allows for controlled charging to the battery 1 power source 1. The DC bus 290 can simultaneously power the multiport DC-AC inverter 240, which allows operation of the TRU components 270 in the VVVF mode. To conclude the above-mentioned feature, the RPCU 2 allows operation of the TRU components 270 in the VVVF mode and simultaneous charging of the battery power source 1 via the paths of FIG. 9.

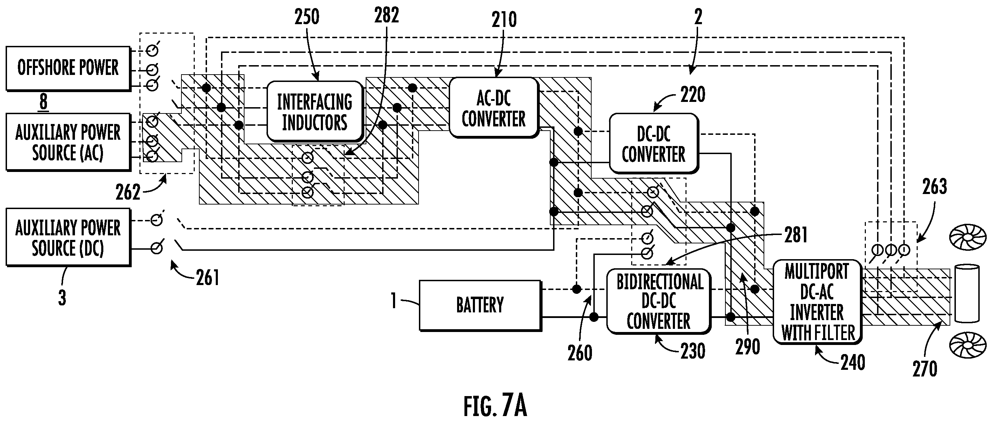

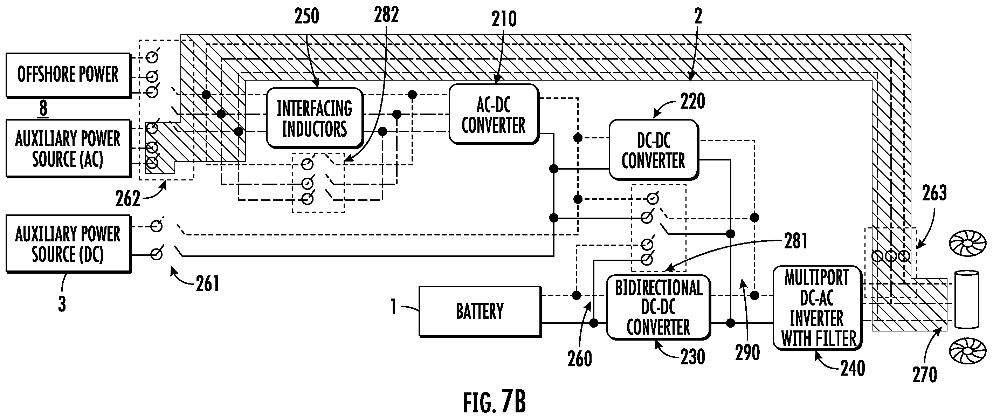

Operating modes of the proposed RPCU 2, when the trailer to which the RPCU 2 is connected is on the road include: Mode-1 - powering the TRU components 270 independently via battery power source 1 (see FIGS. 3A and 3B); Mode-2 - powering the TRU components 270 simultaneously via battery power source 1 and at least one of the multiple auxiliary DC power sources 3 selectively coupled (see FIGS. 4A, 4B, 4C and 5); Mode-3 - powering the TRU components 270 independently via a selectively coupled one of the multiple auxiliary DC power sources 3 when its generated voltage and power are sufficient to drive the compressor in VVVF mode (see FIGS. 7A and 7B); Mode-4 - powering the TRU components 270 simultaneously via the battery power source 1 and at least one of the multiple auxiliary AC power sources 8 selectively coupled (see FIGS. 6A, 6B, 6C, 8 and 9); Mode-5 - powering the TRU components 270 independently via a selectively coupled one of the multiple auxiliary AC power sources 8 when its generated voltage and power are sufficient to drive the compressor where the compressor would be operational in both VVVF and CVCF modes (see FIGS. 7A and 7B); Mode-6 - operating a compressor of the TRU components 270 CVCF control and simultaneously charging the battery power source via offshore power (see FIG. 8); and Mode-7 - operating a compressor of the TRU components 270 with VVVF control and simultaneously charging the battery power source via offshore power (see FIG. 9).

Technical effects and benefits of the described embodiments are the provision of a reconfigurable electrical architecture for powering ETRUs. The reconfigurable electrical architecture can perform multiple functionalities via reconfiguring/leveraging its power electronics sub-components and altering their control to perform targeted/dictated functionalities. Thus, integrating multiple functionalities in single power conversion unit reduces cost. The proposed reconfigurable power conversion unit can run TRU components via battery power and can support simultaneously powering of the TRU components via a diesel generator and/or an axle generator and/or a fuel cell and/or a photovoltaic cell. Thus, the hardware can be adopted to operate with any trailer refrigeration unit product irrespective of power source and region for which it is intended. Also, when the TRU is parked the proposed RPSU can handle TRU operation and simultaneous battery charging via offshore power/ AC charging power as well as support CVCF and VVVF modes when the TRU is on the road and when parked.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the disclosure for various embodiments with various modifications as are suited to the particular use contemplated.

While embodiments to the invention have been described, it will be understood that those skilled in the art, both now and in the future, may make various improvements and enhancements which fall within the scope of the invention, which is defined by the claims which follow.

The following clauses set out aspect of the invention that may or may not presently be claimed, but which may form the basis for future amendment or a divisional application.
1. An electrical architecture for an electric/engineless trailer refrigeration unit (ETRU), the electrical architecture comprising: a battery; multiple auxiliary direct current (DC) power sources; multiple auxiliary alternating current (AC) power sources; TRU components; a master controller; and a reconfigurable power conversion unit (RPCU) comprising an AC-DC converter, a DC-DC converter, a bi-directional DC-DC converter, a multi-port DC-AC converter and an interfacing inductor, the RPCU being configurable by the master controller to transmit electrical power between the battery, the multiple auxiliary DC power sources, the multiple auxiliary AC power sources and the TRU components in accordance with current operational conditions, power levels of the battery, the multiple auxiliary DC power sources and the multiple auxiliary AC power sources and power demands of the TRU components.
2. The electrical architecture according to clause 1, wherein the multiple auxiliary DC power sources comprise at least one of a fuel cell and a photovoltaic cell.
3. The electrical architecture according to clause 1, wherein the multiple auxiliary AC power sources comprise at least one of offshore AC power and an AC charging station.
4. The electrical architecture according to any of clauses 1-3, wherein the current operational conditions comprise on road conditions, parked conditions, variable voltage and variable frequency (VVVF) mode operations and constant voltage and constant frequency (CVCF) mode operations.
5. The electrical architecture according to any of clauses 1-4, wherein the power levels of the battery, the multiple auxiliary DC power sources and the multiple auxiliary AC power sources comprise instances in which there is an excess power level of one or more of the multiple auxiliary DC power sources.
6. The electrical architecture according to any of clauses 1-5, wherein the power demands of the TRU components exceed the power levels of the multiple auxiliary AC power sources.
7. The electrical architecture according to any of clauses 1-6, wherein the RPCU further comprises: a first port by which the RPCU is electrically connected with the battery power; a first switchable port by which the RPCU is electrically connectable with the multiple auxiliary DC power sources; a second switchable port by which the RPCU is electrically connectable with the selected ones of the multiple auxiliary AC power sources; and a third switchable port by which the RPCU is electrically connectable with the TRU components.
8. The electrical architecture according to clause 7, wherein the RPCU further comprises a first bypass switch by which one of the DC-DC converter and the bi-directional DC-DC converter are bypassed and a second bypass switch by which the interfacing inductor is bypassed.

## Claims

1. An electrical architecture (101) for an electric/engineless trailer refrigeration unit, ETRU, the electrical architecture comprising:
a battery (1);
multiple auxiliary direct current, DC, power sources (3);
multiple auxiliary alternating current, AC, power sources (8);
TRU components (4);
a master controller (5); and
a reconfigurable power conversion unit, RPCU, (2) which is configurable by the master controller to transmit electrical power between the battery, the multiple auxiliary DC power sources, the multiple auxiliary AC power sources and the TRU components in accordance with current operational conditions, power levels of the battery, the multiple auxiliary DC power sources and the multiple auxiliary AC power sources and power demands of the TRU components.

2. The electrical architecture according to claim 1, wherein the multiple auxiliary DC power sources comprise at least one of a fuel cell and a photovoltaic cell.

3. The electrical architecture according to claim 1, wherein the multiple auxiliary AC power sources comprise at least one of offshore AC power and an AC charging station.

4. The electrical architecture according to any of claims 1-3, wherein the current operational conditions comprise on road conditions, parked conditions, variable voltage and variable frequency (VVVF) mode operations and constant voltage and constant frequency (CVCF) mode operations.

5. The electrical architecture according to any of claims 1-4, wherein the power levels of the battery, the multiple auxiliary DC power sources and the multiple auxiliary AC power sources comprise instances in which there is an excess power level of one or more of the multiple auxiliary DC power sources.

6. The electrical architecture according to any of claims 1-5, wherein the power demands of the TRU components exceed the power levels of the multiple auxiliary AC power sources.

7. The electrical architecture according to any of claims 1-6, wherein the RPCU comprises:
an AC-DC converter (210);
a DC-DC converter (220);
a bi-directional DC-DC converter (230);
a multi-port DC-AC converter (240); and
an interfacing inductor (250).

8. The electrical architecture according to claim 7, wherein the RPCU further comprises:
a first port (260) by which the RPCU is electrically connected with the battery power;
a first switchable port (261) by which the RPCU is electrically connectable with the multiple auxiliary DC power sources;
a second switchable port (262) by which the RPCU is electrically connectable with the selected ones of the multiple auxiliary AC power sources; and
a third switchable port (263) by which the RPCU is electrically connectable with the TRU components.

9. The electrical architecture according to claim 8, wherein the RPCU further comprises a first bypass switch (281) by which one of the DC-DC converter and the bi-directional DC-DC converter are bypassed and a second bypass switch (282) by which the interfacing inductor is bypassed.

10. A reconfigurable power conversion unit, RPCU, (2) for powering a trailer refrigeration unit, TRU, the RPCU comprising:
an alternating current-direct current, AC-DC, converter (210);
a DC-DC converter (220);
a bi-directional DC-DC converter (230);
a multi-port DC-AC converter (240); and
an interfacing inductor (250),
the RPCU being configured to perform multiple functionalities via reconfigurations of the AC-DC converter, the DC-DC converter, the bi-directional DC-DC converter, the multi-port DC-AC converter and the interfacing inductor.

11. The RPCU according to claim 10, further comprising:
a first port (260) by which the RPCU is electrically connected with the battery power;
a first switchable port (261) by which the RPCU is electrically connectable with the multiple auxiliary DC power sources;
a second switchable port (262) by which the RPCU is electrically connectable with the selected ones of the multiple auxiliary AC power sources;
a third switchable port (263) by which the RPCU is electrically connectable with the TRU components;
a first bypass switch (281) by which one of the DC-DC converter and the bi-directional DC-DC converter are bypassed; and
a second bypass switch (282) by which the interfacing inductor is bypassed.

12. The RPCU according to claim 11, wherein the RPCU is reconfigurable for:
powering the TRU using battery power independently;
powering the TRU using at least one or more of battery power, auxiliary AC power and auxiliary DC power;
powering the TRU and battery charging using auxiliary AC power in a parked condition; and
allowing for constant voltage, constant frequency (CVCF) and variable voltage, variable frequency (VVVF) operations.
